Europäisches Patentamt

European Patent Office

Office européen des brevets

(19)

(11) Veröffentlichungsnummer : **0 038 051**
**B1**

(12) **EUROPÄISCHE PATENTSCHRIFT**

(45) Veröffentlichungstag der Patentschrift :
02.05.84

(51) Int. Cl.³ : **F 16 L 59/16**

(21) Anmeldenummer : **81102779.6**

(22) Anmeldetag : **10.04.81**

(54) **Wärmegedämmtes Rohr.**

(30) Priorität : **10.04.80 DE 3013796**

(43) Veröffentlichungstag der Anmeldung :
**21.10.81 Patentblatt 81/42**

(45) Bekanntmachung des Hinweises auf die Patenterteilung : **02.05.84 Patentblatt 84/18**

(84) Benannte Vertragsstaaten :
**AT BE CH DE FR GB IT LI LU NL SE**

(56) Entgegenhaltungen :
DE-A- 2 400 306
DE-A- 2 758 516
DE-B- 2 823 051
DE-U- 1 933 406
DE-U- 7 733 865
FR-A- 2 050 533
GB-A- 1 335 055
GB-A- 2 027 158
US-A- 4 167 953

(73) Patentinhaber : **G + H MONTAGE GmbH
Westendstrasse 17
D-6700 Ludwigshafen (DE)**

(72) Erfinder : **Ball, Hugo, Dr.
Im Schreck 4
D-6702 Bad Dürkheim (DE) .**
Erfinder : **Berger, Alfred
Carl-Zimmermann-Strasse 48
D-6724 Dudenhofen (DE)**
Erfinder : **Kohlstadt, Wilhelm
Eichholzstrasse 25
D-5810 Witten Rüdingshausen (DE)**

(74) Vertreter : **KUHNEN & WACKER Patentanwaltsbüro
Schneggstrasse 3-5 Postfach 1729
D-8050 Freising (DE)**

Wärmegedämmtes Rohr

Die Erfindung betrifft ein wärmegedämmtes Rohr mit einem aus am Ort miteinander verschweißten Rohrschüssen bestehenden Mediumrohr, nach dem Oberbegriff des Anspruchs.

Derartige wärmegedämmte Rohre werden insbesondere für erdverlegte Fernwärme-Rohrleitungen verwendet und besitzen in einer häufigen Bauweise ein Mediumrohr aus Stahl, ein das Mediumrohr mit Abstand umgebendes äußeres Mantelrohr aus Polyäthylen und dazwischen eine Wärmedämmschicht aus Polyurethan-Hartschaum oder Mineralfaserwolle. Derartige Rohre können fabrikmäßig in einzelnen Rohrschüssen vorgefertigt werden, wobei am Ort die Verbindung der Rohrschüsse erfolgt. Hierzu ragt an den fabrikmäßig vorgefertigten Rohrschüssen das innere Mediumrohr beispielsweise 10 cm beidseitig über die Wärmedämmschicht und das Mantelrohr hinaus, so daß bei der Schweißung benachbarter Enden der Rohrschüsse des Mediumrohres die Schweißstelle gut zugänglich ist und keine Beeinträchtigung von Wärmedämmschicht und Mantelrohr durch die Schweißwärme erfolgt. Im Anschluß an die Schweißung muß dann der Bereich des Schweißstoßes am Ort mit einem entsprechenden Abschnitt einer Wärmedämmschicht und einer muffenartigen Ummantelung umgeben werden, welche die einander benachbarten Enden des Mantelrohres im Schweißbereich verbindet.

Hierzu ist es beispielsweise aus der DE-U-1 933 406 bekannt, fabrikmäßig vorgefertigte Halbschalen aus Polyurethan-Hartschaum mit einer Länge zu verwenden, die im wesentlichen dem Abstand der Wärmedämmschicht zu beiden Seiten des Schweißstoßes entspricht, und diese über das geschweißte Mediumrohr zu setzen. Als Muffe wird ein schrumpffähiges Rohrstück verwendet, welches vor der Verbindung der Mediumrohre durch die Schweißung über eines der Rohrenden geschoben wird und nach Einbringung der Halbschalen in den Bereich des Schweißstoßes zurückgeschoben und dort durch Wärmeeinwirkung geschrumpft wird.

Fabrikmäßig vorgefertigte Schalen aus Polyurethan-Hartschaum weisen zwar gute Qualität des Schaumstoffes auf und eignen sich somit auch für eine Wärmedämmung unmittelbar an dem normalerweise heißen Mediumrohr, jedoch verbleiben zwangsläufig zwischen den Halbschalen Längsfugen und zum Mediumrohr hin Radialfugen, so daß bei einer Verletzung oder dem Undichtwerden der äußeren Abdichtung durch das Mantelrohr oder die Muffe und insbesondere durch den Verbindungsbereich zwischen Mantelrohr und Muffe eindringende Feuchtigkeit unmittelbar bis zum Mediumrohr aus Stahl vordringen und dort Korrosion verursachen kann. Eine solche Durchfeuchtung der Wärmedämmschicht setzt darüber hinaus deren Wärmedämmfähigkeit herab.

Etwa aus der DE-A-2 400 306 ist es andererseits bekannt, den Ringraum im Bereich des Schweißstoßes zwischen dem Mediumrohr und der äußeren Muffe voll mit Ortschaum auszuschäumen. Derartiger Polyurethan-Ortschaum besteht aus zwei Komponenten, die auf der Baustelle mittels eines Mischstabes miteinander verrührt werden oder gleichzeitig mit Hilfe von Gas als Treibmittel kurz vor dem Austritt aus einem Überdruckbehälter miteinander vermischt werden. Bei Ortschäumen hängt jedoch die Qualität nicht nur vom Vermischungsergebnis, sondern auch noch von der Verarbeitungstemperatur und der Schaumdicke ab, so daß auf der Baustelle niemals diejenigen Schaumqualitäten erzielt werden können, wie sie fabrikmäßig bei Vorfertigung von Schalen erzielbar sind. Ortschaum besitzt somit regelmäßig mindere Qualität, was insbesondere im Anlagebereich an dem in der Regel heißen Mediumrohr nachteilig in Erscheinung tritt. Darüber hinaus ist das Mediumrohr aus Stahl ein guter Wärmeleiter, der die Reaktionswärme des Harzes beim Schäumen ableitet, so daß der Schäumvorgang am Ort dadurch behindert wird.

Sowohl bei einer Dämmung des Schweißbereiches mit Schalen aus Fertigschaum wie auch mit Ortschaum besteht ein wesentliches Problem darin, die äußere Muffe sauber und dauerhaft flüssigkeitsdicht aufzubringen. Im Falle der DE-U-1 933 406 wird das dort als Muffe verwendete schrumpffähige Rohrstück aus Kunststoff vor dem Schweißvorgang über das Ende eines Rohrabschnittes geschoben und nach Einbringen der Halbschalen aus Fertigschaum in den Bereich des Schweißstoßes zurückgeschoben und dort durch Wärmeeinwirkung geschrumpft. Dadurch, daß das die Muffe bildende Rohrstück etwa bei erdverlegten Leitungen während der Arbeiten im Bereich des Schweißstoßes im Graben liegt, ist seine Verschmutzung unvermeidlich ; derartige Verschmutzungen am Innenumfang des Rohrstückes sind Hauptursache für dort auftretende Undichtheiten. Im Falle einer Wärmedämmung mit Ortschaum gemäß der DE-A-2 400 306 werden vorgefertigte Segmentwände aus Kunststoff mit randseitigen Wulsten verwendet, die über Klemmleisten miteinander verbunden werden. Hierdurch können die die Muffe bildenden Segmentwände bis zum Abschluß der Schweißarbeiten sauber außerhalb des Grabens gelagert und, bei entsprechender Sorgfalt, in sauberem Zustand um den Schweißstoß herum gelegt und befestigt werden ; jedoch ist hier wiederum der gegenseitige Anlagebereich der Wulste eine Schwachstelle, die insbesondere an den stirnseitigen Enden der Muffe ein Eindringen von Feuchtigkeit zwischen Muffe und Mantelrohr in die Wärmedämmung hinein ermöglichen kann.

Insbesondere zur Erzielung einer einwandfreien Abdichtung ist aus der DE-A-2 758 516 entsprechend dem Oberbegriff des Anspruchs bekannt, die Enden der Mantelrohre über die Enden der entsprechenden Wärmedämmschicht vorstehen zu lassen und in den so gebildeten U-förmigen Ringraum von innen her Dichtungsmanschetten einzusetzen, die durch den inneren Schäumdruck dicht an den Innenumfang der vorstehenden Enden der Mantelrohre angedrückt werden sollen. Die aufeinander zu ragenden Enden der Manschetten weisen gegenseitigen Abstand auf, der von einer flexiblen Muffe übergriffen wird. Im Anschluß an den Schweißvorgang werden zunächst Schalen aus vorgefertigtem Schaum um den Schweißbereich gelegt, wonach der Bereich zwischen den vorgefertigten Schalen und den Manschetten sowie der Muffe mit Ortschaum ausgeschäumt wird, wobei eine gesonderte äußere Abstützung der Muffe gegen den Schäumdruck erforderlich ist. Dadurch, daß an der Außenseite der fabrikmäßig vorgefertigten Schalen nicht unmittelbar die Muffe, sondern vielmehr eine weitere Schicht aus Ortschaum anliegt, der auch in die Fugen zwischen den Schalen dringt und diese umgibt, kann auch bei einem Undichtwerden des Mantelrohres oder der Muffe Feuchtigkeit nich ohne weiteres bis zum inneren Mediumrohr vordringen. Dennoch aber wird im radial inneren Bereich der Wärmedämmschicht von der überlegenen Schaumqualität vorgefertigter Schalen Gebrauch gemacht, so daß insoweit die Vorzüge einer Wärmedämmung mit fabrikmäßig vorgefertigtem Schaumstoff erhalten bleiben. Allerdings reichen die Schalen aus Fertigschaum nur über einen Teil der freien Rohrlänge des Mediumrohres zwischen den vorgefertigten Dämmschichten der Rohrschüsse, da die Schalen vorbei an den vorspringenden Enden der Mantelrohrabschnitte und der daran befestigten Manschetten eingebracht werden müssen, so daß sie den Abstand zwischen den Dämmschichten der Rohrschüsse nicht vollständig überbrücken können. Zwischen den Enden der Dämmschichten der Rohrschüsse und den seitlichen Enden der Schalen aus Fertigschaum liegt somit der Ortschaum an der Außenoberfläche des Mediumrohres an, so daß die mit der Verwendung von Schalen aus Fertigschaum im Bereich des Schweißstoßes am Mediumrohr erzielbaren Vorteile nur im unmittelbaren Bereich des Schweißstoßes und nicht über die ganze zu überbrückende Länge der Enden des Mediumrohres erzielt werden können.

Weiterhin mag zwar zwischen den seitlich eingebrachten Manschetten und den Enden des Mantelrohres die gewünschte Dichtheit gegen ein Eindringen von Feuchtigkeit erzielbar sein, wenn auch mit ganz erheblichem konstruktivem und herstellungstechnischem Zusatzaufwand ; jedoch ergeben sich entsprechende Probleme im Dichtungsbereich zwischen der Muffe und den von der Muffe übergriffenen Enden der Manschetten, wobei die Muffe entweder rohrförmig geschlossen vorgefertigt ist und so vor der Herstellung der Schweißverbindung im Graben gelagert werden muß und verschmutzt, oder aber aus Segmenten besteht, die dann entsprechend miteinander verbunden werden müssen und an den Verbindungsstellen entsprechende Dichtprobleme ergeben.

Demgegenüber liegt der Erfindung die Aufgabe zugrunde, ein wärmegedämmtes Rohr der im Oberbegriff des Anspruchs angegebenen Gattung zu schaffen, welches bei möglichst geringem Herstellungs- und Montageaufwand neben bestmöglicher Wärmedämmung auch eine dauerhaft sichere Abdichtung des Verbindungsbereiches ermöglicht.

Diese Aufgabe wird durch die kennzeichnenden Merkmale des Anspruchs gelöst.

Dadurch, daß — ähnlich wie im Falle der DE-U-1 933 406 — eine die benachbarten Enden des Mantelrohres von außen übergreifende Muffe verwendet wird, kann das Mantelrohr mit der vorgefertigten Dämmschicht abschließen und entfallen vormontierte Einbauten an den Stirnflächen der vorgefertigten Dämmschicht jedes Rohrschusses, so daß die vorgefertigten Halbschalen über die gesamte Breite des Verbindungsbereiches zwischen den stirnseitigen Enden der Dämmschichten der Rohrschüsse reichen können, so daß das nackte Mediumrohr im Verbindungsbereich auf seiner ganzen Länge von Schalen aus Fertigschaum abgedeckt ist. Dadurch, daß die Muffe einen Blechmantel aufweist, der aus einer gerundeten Blechschale mit einer Längsnaht besteht, kann der Blechmantel nach Fertigstellung der Schweißung und Einbringen der Schalen aus Fertigschaum in den Graben eingebracht werden und ist somit vor Verschmutzung geschützt. Der Blechmantel weist weiterhin ausreichende Stabilität auf, um dem Schäumdruck des Ortschaumes zu widerstehen, so daß zusätzliche äußere Stützkonstruktionen für den Schäumvorgang entfallen können und der Blechmantel selbst die Schäumform bildet. Dadurch, daß die Innenfläche des Blechmantels mit einem Primer versehen ist, ist eine innige und feuchtigkeitsdichte Haftung des Ortschaums an der Innenfläche des Blechmantels gewährleistet. Da der Ortschaum im Bereich zwischen den Enden der Dämmschichten der benachbarten Rohrschüsse auch in den Bereich der Längsnaht des Blechmantels eindringt, ist hierdurch eine erste innere Abdichtung gegen Feuchtigkeitseintritt erzielt.

Der Blechmantel ist jedoch weiterhin seinerseits von einer Dichtungsbahn aus schrumpffähigem Kunststoff umgeben, die ebenfalls nachträglich in den Graben eingebracht werden kann und entweder an einem seitlichen Längsschlitz durch eine Klammerung geschlossen ist oder spiralig überlappend gewickelt aufgebracht ist. Die Dichtungsbahn reicht über die seitlichen Enden des Blechmantels hinaus und deckt so dessen Enden insbesondere im Bereich seiner Längsnaht sauber nach außen hin ab. Die an der Innenseite der Dichtungsbahn vorgesehene Mastixschicht wird beim Schrumpfen der Dichtungsbahn als zusätzliches Dichtmittel in den Bereich der Längsnaht des Blechmantels hineingedrückt und umgibt auch die stirnseitigen Enden der Längsnaht ; andererseits wird die Mastixschicht beim Schrumpfvorgang auch in Nahtbereichen wie etwa dem Längsschlitz der Dichtungsbahn verpreßt und sorgt so auch hier für eine zusätzliche Abdichtung. Somit bildet die Dichtungsbahn mit der an ihrer Innenseite verpreßten Mastixschicht eine Hauptdichtung nach außen hin, die auch den Blechmantel seitlich übergreift, während der Bereich des Blechmantels zusätzlich durch die angepreßte Mastixschicht sowie an der Innenseite durch den infolge des Primers feuchtigkeitsdicht und innig haftenden Ortschaum abgedichtet ist. Einem Vordringen von Feuchtigkeit bis zum Ortschaum, geschweige denn zum Mediumrohr, ist daher eine Mehrzahl hintereinander angeordneter und je für sich hochwirksamer Dichtungen entgegengesetzt, so daß sich eine dauerhaft feuchtigkeitsdichte Ausbildung ergibt, welche auch die ausgezeichnete Wärmedämmwirkung durch die kombinierte Verwendung von inneren Schalen aus Fertigschaum und äußerem Ortschaum sicher über lange Zeit aufrechterhält.

Die Erfindung wird nachfolgend anhand einer zeichnerisch dargestellten Ausführungsform näher erläutert.

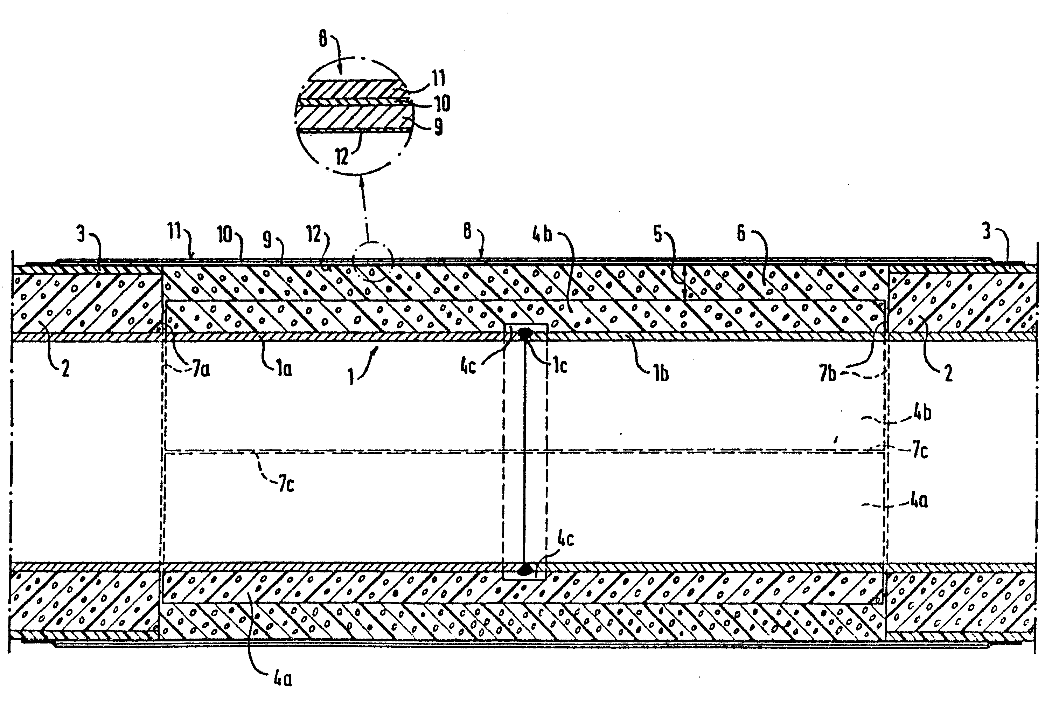

Die einzige Figur der Zeichnung zeigt einen Axialschnitt durch den Bereich des Schweißstoßes eines erfindungsgemäßen wärmegedämmten Rohres.

In der Zeichnung ist mit 1 ein Mediumrohr bezeichnet, welches aus Stahl gefertigt ist und insbesondere für eine Fernwärme-Rohrleitung verwendet werden kann. Das Mediumrohr 1 besteht aus benachbarten Rohrschüsen 1a und 1b, die an einem Schweißstoß 1c miteinander verbunden sind. Die Rohrschüsse 1a und 1b sind fabrikmäßig vorgefertigt und über den größten Teil ihrer Länge mit einer Wärmedämmschicht 2 beispielweise aus Polyurethan-Hartschaum und einem Mantelrohr 3 beispielsweise aus Polyäthylen versehen. Die Wärmedämmschicht 2 und das Mantelrohr 3 sind jedoch zu beiden Seiten jedes Rohrschusses 1a oder 1b um ein Maß von beispielsweise 10 cm oder mehr kürzer als das Ende des Mediumrohres 1 zum späteren Schweißstoß 1c hin, so daß dieses vorsteht und eine unbehinderte Verschweißung im Bereich des Schweißstoßes 1c gewährleistet ist.

Im Anschluß an die Schweißung am Ort liegt somit der in der Zeichnung dargestellte Bereich zwischen den Enden der Dämmschicht 2 und des Mantelrohres 3 der beiden benachbarten Rohrschüsse 1a und 1b nackt vor, und muß eine Wärmedämmung sowie einen äußeren Schutz erhalten, der die beiden Enden des Mantelrohres 3 überdeckt.

Hierzu werden zunächst Schalen 4a und 4b mit einer Nut 4c zur Aufnahme des Schweißwulstes am Schweißstoß 1c, im Beispielsfalle Halbschalen, aus fabrikmäßig vorgeschäumtem Kunststoff wie Polyurethan-Hartschaum um das Mediumrohr 1 gelegt und bilden so eine innere Lage der Wärmedämmung. Die Höhe und Dicke der Schalen 4a und 4b ist jedoch so bemessen, daß bis zum Umfangsbereich des Mantelrohres 3 ein hohlzylindrischer Ringraum 5 verbleibt, der im Beispielsfalle etwa der radialen Höhe der Schalen 4a und 4b entspricht. In jedem Fall sollte die radiale Höhe des Ringraumes 5 einen Wert von etwa 1 cm nicht wesentlich unterschreiten, da eine solche, relativ erhebliche radiale Höhe eine gleichmäßige Einbringung von Ortschaum 6 gestattet, der den Ringraum 5 vollständig ausfüllt und dabei zugleich axial verlaufende Fugen oder Spalte 7c zwischen den Segment- oder Halbschalen 4a und 4b sowie stirnseitige Spalte 7a und 7b zu den benachbarten Wärmedämmschichten 7 hin abdeckt bzw., soweit offen, in diese eindringt. Dadurch werden die Schalen 4a und 4b vom Ortschaum 6 vollständig eingehüllt und gegen einen Zutritt von Feuchtigkeit sicher abgedichtet.

Es gibt z. Zt. erhebliche Bemühungen, um Schäume von höherer Temperaturbeständigkeit, insbesondere über 130 °C, zu entwickeln und einzuführen. Derartiger temperaturbeständiger Schaum eignet sich besonders für die vorgefertigten Schalen 4a und 4b, um ihre gegenüber Ortschaum ohnehin erheblich bessere Temperaturbeständigkeit und Qualität weiter zu erhöhen. In besonderen Fällen ist daher der Einsatz von vorgefertigten Schalen 4a und 4b vorgesehen, deren Temperaturbeständigkeit durch veränderte Rezepturen, z. B. durch Erhöhung der Isozyanat-Komponente (PIR-Schaum), oder durch Zusätze z. B. aus Pulvern, Fasern oder Granalien erhöht worden ist. Bei der Verarbeitung dieser Materialien treten zum Teil wesentlich erschwerende Umstände ein, so daß dies an der Baustelle nicht möglich ist und daher schon aus diesem Grunde eine fabrikmäßige Vorfertigung erfolgen muß, um überhaupt derartige spezielle Schäume auf der Baustelle verfügbar zu machen.

Vor der Einbringung des Ortschaumes 6 in den Ringraum 5 wird über dem Stoßbereich eine Muffe 8 angebracht, die bevorzugt einen vorbereiteten, gerundeten Blechmantel 9 aus Stahlblech, Edelstahlblech oder Aluminiumblech aufweisen kann, der durch Nieten oder Schrauben in einem axial verlaufenden Überlappungsbereich verbunden werden kann. Die Verwendung eines derartigen, aus einer gerundeten Bahn bestehenen Blechmantels 9 vermeidet die Notwendigkeit, eine umfangsseitig geschlossene Überschubmuffe vor der Schweißung über eines der Rohrenden schieben zu müssen, wo insbesondere bei erdverlegten Rohren die Muffe verschmutzt und eingedrungene Feuchtigkeit, Schlamm oder Sandreste nicht einwandfrei entfernt werden können, so daß Feuchtigkeit an der Innenseite der Muffe im Bereich des Schweißstoßes 1c vorliegen würde.

Nach dem Aufbringen des Blechmantels 9 und dem Schließen im Überlappungsbereich erfolgt in an sich bekannter Weise die Ausschäumung des Ringraumes 5 mit Ortschaum 6. Anschließend erfolgen eine Abdichtung und ein Korrosionsschutz des Blechmantels 9 mit einer Mastixschicht 10, beispielsweise einer Bituthene-Dichtungsbahn, welche die benachbarten Enden des Mantelrohres 3 zu beiden Seiten des Blechmantels 9 überlappt. Hierauf wird schließlich eine geteilte, schrumpffähige Dichtungsbahn 11 aus Polyäthylen aufgebracht, deren Teilungsschlitz in an sich bekannter Weise zwischen durchgehenden Wulsten liegt, die mittels eines Klemmstabes aus Edelstahl gegeneinander geklammert werden können, um so die Dichtungsbahn 11 radial zu schließen. Bei anschließender Erwärmung schrumpft die Dichtungsbahn 11 und bildet einen satt sitzenden Außenmantel für die Muffe 8.

Alternativ kann zur Abdichtung der Längsnaht des Blechmantels 9 und der Ringnaht des Blechmantels 9 zum Mantelrohr 3 aus Polyäthylen auch eine mit Mastix beschichtete, vorwiegend unter Wärmeeinwirkung schrumpffähige Bahn in Form spiraliger, überlappender Umwicklungen oder als über die ganze Breite der Muffe gehende Bahn aufgebracht werden.

Am unmittelbaren Umfang des heißen Mediumrohres 1 liegt somit eine Wärmedämmung aus vorgefertigtem, hochwertigem Schaum, insbesondere Polyurethan-Hartschaum, entweder in Form der Wärmedämmschicht 2 oder in Form der Schalen 4a und 4b vor. Die im Falle der Verwendung vorgefertigter Schalen 4a und 4b unvermeidlichen Fugen zum Mediumrohr 1 hin, die bei Undichtwerden des des Mantelrohres 3 bzw. der Muffe 8 einen Feuchtigkeitszutritt zum Mediumrohr 1 ermöglichen würden, sind durch den radial äußeren Mantel aus Ortschaum 6 sicher abgedichtet. Dessen Ausschäumung am Ort wird überdies dadurch begünstigt, daß der Ortschaum 6 durch die Schalen 4a und 4b an einer unmittelbaren Berührung mit dem Mediumrohr 1 und damit an einer Wärmeabfuhr der Reaktionswärme des Harzes durch das Mediumrohr 1 gehindert ist, so daß der Ausschäumvorgang unter optimalen Bedingungen erfolgen kann. Bei kalter Witterung kann eine Vorwärmung des Blechmantels 9 stattfinden, um die Ausschäumreaktion zu unterstützen und so steuernd durch Wärmezufuhr auf den Schäumvorgang einzuwirken. Die Innenseite des Blechmantels 9 ist mit einem sogenannten Primer 12 versehen, der nach Art einer Grundierungsschicht zu einer innigen, feuchtigkeitsdichten Haftung des Ortschaumes 6 am Blechmantel 9 führt. Durch die Verwendung einer gerundeten Bahn für den Blechmantel 9, welcher trocken und sauber aufgebracht werden kann, werden auch sonstige Störungen der Haftung des Ortschaumes 6 am Blechmantel 9 durch eingebrachte Verunreinigungen od. dgl. ausgeschlossen.

## Anspruch

Wärmegedämmtes Rohr mit einem aus am Ort miteinander verschweißten Rohrschüssen (1a, 1b) bestehenden Mediumrohr (1) insbesondere aus Stahl, mit einer das Mediumrohr (1) umgebenden Dämmschicht (2) und mit einem äußeren, die Dämmschicht schützenden Mantelrohr (3) insbesondere aus Kunststoff wie Polyäthylen, bei dem die Dämmschicht (2) und das Mantelrohr (3) in einem Abstand vom Schweißstoß (1c) enden und der Bereich des Schweißstoßes (1c) unter Verwendung vorgefertiger Schalen (4a, 4b) aus Schaumkunststoff wie Polyurethan-Hartschaum wärmegedämmt ist, bei dem der Abstand zwischen den Enden der Mantelrohre (3) durch eine den Bereich des Schweißstoßes (1c) übergreifende Muffe (8) überbrückt ist, und bei dem zwischen dem Außenumfang der vorgefertigten Schalen (4a, 4b) und dem Innenumfang der Muffe (8) ein mit Ortschaum (6) ausgefüllter Ringraum (5) vorgesehen ist, dadurch gekennzeichnet, daß die Muffe (8) die Enden der Mantelrohre (3) von der Außenseite her umgreift und einen aus einer gerundeten und an einer Längsnaht überlappenden Bahn bestehenden Blechmantel (9) aufweist, der den Ringraum (5) für den Ausschäumvorgang umschließt, daß die Innenseite des Blechmantels (9) mit einem eine innige, feuchtigkeitsdichte Haftung des Ortschaumes (6) ergebenden Primer (12) versehen ist, und daß an der Außenseite des Blechmantels (9) eine Dichtungsbahn (11) aus schrumpffähigem Kunststoff vorgesehen ist, die den Blechmantel (9) seitlich übergreift und zwischen der und dem Blechmantel (9) eine Mastixschicht (10) vorgesehen ist.

## Claim

A heat-insulated pipe comprising a medium-pipe (1) preferably made of steel, consisting of connecting portions (1a, 1b) welded together *in situ*, an insulating layer (2) surrounding the medium-pipe (1) and an outer pipe casing (3), protecting the insulating layer, said pipe casing (3) being preferably made of synthetic material such as polyethylene, the insulating layer (2) and the pipe casing (3) ending in a distance from the welded joint (1c) and the area of the welded joint (1c) being insulated by use of prefabricated shells (4a, 4b) made of plastic foam like polyurethane hard foam, the distance between the end portions of the pipe casings (3) being bridged by a bushing (8), which overlaps the portion of the welded joint (1c), and with an annular space (5) filled with foam (6) produced *in situ* being provided between the outer perimeter of the prefabricated shells (4a, 4b) and the inner perimeter of the bushing (8), characterized in that the bushing (8) encompasses the end portions of pipe casings (3) from the outer side and comprises a sheet cover (9) formed by a rounded sheath overlapping at a longitudinal seam, the sheet cover (9) surrounding the annular space (5) for the foaming process, with the inner side of the sheet cover ((9) being provided with a primer (12) yielding an intimate, humidity sealing bond of the *in situ* foam, and with a sealing sheath (11) of shrinkable plastic being provided at the outer side of the sheet cover (9), which laterally overlaps the sheet cover (9) and with a Mastix layer (10) being provided between the sealing sheath (11) and the sheet cover (9).

## Revendication

Tuyau calorifuge comprenant un tuyau (1) transporteur de fluide, en particulier en acier, formé par des éléments de tuyau (1a, 1b) soudés bout à bout sur place, une couche isolante (2) entourant le tuyau (1) transporteur de fluide et un tuyau extérieur (3) de protection, en particulier en matière synthétique telle que le polyéthylène, protégeant la couche isolante, la couche isolante (2) et le tuyau de protection (3) se terminant à une certaine distance du joint de soudure (1c) et la zone du joint de soudure (1c) étant isolée thermiquement par l'utilisation de coquilles (4a, 4b) préfabriquées en matière synthétique cellulaire, la distance entre les extrémités des tuyaux (3) de protection étant surmontée d'un manchon (8) chevauchant la zone du joint de soudure (1c) et dans lequel un espace annulaire (5) est prévu entre le périmètre extérieur des coquilles (4a, 4b) préfabriquées et le périmètre intérieur du manchon (8) et rempli de matière cellulaire formé sur place, caractérisé en ce que le manchon (8) recouvre les extrémités des tuyaux de protection (3) à partir du côté extérieur et a un manteau en tôle (9) formé à partir d'une feuille enroulée à recouvrement le long d'un joint longitudinal, le manteau en tôle entourant l'espace annulaire (5) pour le procédé de formation de mousse, que le côté intérieur du manteau en tôle (9) est pourvu d'une couche de fond (12) fournissant une adhérence intime étanche à l'humidité de la mousse formée sur place, et qu'une feuille d'étanchéité (11) en matière synthétique rétractable est prévue sur le côté extérieur du manteau en tôle (9) qui dépasse latéralement le manteau en tôle (9), une couche de mastique (10) étant prévue entre la feuille d'étanchéité et le manteau en tôle (9).